## Europäisches Patentamt

## European Patent Office

## Office européen des brevets

(11) Veröffentlichungsnummer: **0 110 056**
A2

(12) **EUROPÄISCHE PATENTANMELDUNG**

(21) Anmeldenummer: **83109883.5**

(22) Anmeldetag: **04.10.83**

(51) Int. Cl.³: **A 01 F 15/00, A 01 D 87/12**

(30) Priorität: **05.10.82 DE 3236861**
**08.02.83 DE 3304166**

(71) Anmelder: **BUSATIS-WERKE GmbH u. Co KG, Industriestrasse 8 Postfach, D-5609 Hückeswagen (DE)**

(84) Benannte Vertragsstaaten: **AT BE CH DE FR GB IT LI LU NL SE**

(43) Veröffentlichungstag der Anmeldung: **13.06.84**
**Patentblatt 84/24**

(71) Anmelder: **Weichel, Ernst, Bahnhofstrasse 1, D-7326 Heiningen (DE)**

(84) Benannte Vertragsstaaten: **DE FR GB**

(72) Erfinder: **Weichel, Ernst, Bahnhofstrasse 1, D-7326 Heiningen (DE)**
Erfinder: **Biller, Bernd, Hörather Strasse 135a, D-5600 Wuppertal (DE)**

(84) Benannte Vertragsstaaten: **AT BE CH DE FR GB IT LI LU NL SE**

(54) **Verfahren und Vorrichtung zum Transportieren und Lagern von Rundpressballen.**

(57) Ein Verfahren zum Transportieren und Zwischenlagern von Rundpreßballen (18, 18') aus halmartigem, landwirtschaftlichem Gut sieht vor, die aus dem Preßraum (1a) der Presse (1) austretenden Rundballen (18, 18') mittels einer unmittelbar an die Presse (1) angehängten Transporteinrichtung (19) zu erfassen und dem eigentlichen Lagerplatz zuzuführen. Als Transporteinrichtung dient dabei ein einachsiger (8, 20) Tiefladewagen (19), der zwei oder mehr solcher Ballen (18, 18') gleichzeitig aufnehmen und befördern kann.

EP 0 110 056 A2

Ernst Weichel
Heiningen
Busatis-Werke GmbH u. Co KG
Remscheid

Remscheid, den 23.9.1983

Verfahren und Vorrichtung zum Transportieren und Lagern
von Rundpreßballen.

Die Erfindung betrifft ein Verfahren und zugehörige Vorrichtungen zum Transportieren von gepreßten und abgebundenen Rundpreßballen aus halmartigem Erntegut.

Die an landwirtschaftlichen Zugfahrzeugen angehangenen
Rundballenpressen nehmen das Erntegut, wie Heu, Stroh,
Anwelkgut und dgl. auf, pressen es während der Fahrt zu
großen Rundpreßballen, binden dieselben bei Unterbrechung
der Fahrt ab und legen sie nach Öffnen ihrer rückwärtigen
Verschlußklappe auf dem Feld verstreut ab. Zum erforderlichen Aufsammeln und Abtransport werden diese großen
Rundballen zum Teil mit dem Frontlader eines Schleppers
aufgenommen, auf einen Transportwagen geladen und mit
diesem abtransportiert. Gemäß anderen Verfahren werden
spezielle Ballensammelwagen eingesetzt, die mittels umfangreicher Ladeeinrichtungen die verstreut auf dem Feld
liegenden Rundpreßballen während der Fahrt aufnehmen, eine
Vielzahl derselben auf der Ladefläche stapeln, sie abtransportieren um sie dann an gewünschter Stelle abzuladen.

Diese Verfahren weisen eine Reihe besonderer Nachteile auf.
Die auf den Feldern verstreut liegenden Rundpreßballen
müssen unter großem Mühe- und Zeitaufwand und dem Einsatz
umfangreicher Einrichtungen, wie Schlepper mit Frontlader
und Schlepper mit Anhänger oder einem Schlepper mit Spezialsammelwagen bzw. einem Selbstfahrer dieser Art eingesammelt und über oft unverhältnismäßig weite Strecken
transportiert werden. Steht nur ein Schlepper zur Verfügung, so müssen mit diesem zuerst die Rundpreßballen einzeln zu einem abgestellten Wagen transportiert werden,
der Wagen muß dann angehangen und anschließend der Transport durchgeführt werden, um dann nach der Rückkehr der
Fahrzeugkombination zunächst den Wagen an geeigneter Stelle
wieder abhängen zu müssen, bevor mit dem nächsten Laden begonnen werden kann. Bei diesem Verfahren und bei einem solchen, das einen Ladeschlepper und ein bzw., jenach Entfernung, mehrere Transportkombinationen verwendet, liegt
ein großer Zeit- und Maschineneinsatz vor, die Felder
werden zu sehr mit schädlichen Fahrspuren versehen, was
wegen der Bodenverdichtung nachfolgend zu Mindererträgen
führt und das Abladen ist beschwerlich. Die Anschaffung
spezieller gezogener oder selbstfahrender Aufsammel- und
Transportfahrzeuge ist den meisten landwirtschaftlichen
Betrieben finanziell nicht möglich, zu-dem ist auch hier
der Zeitaufwand zu hoch und es liegt ebenfalls eine starke
Bodenverfestigung vor. Durch die Zeitverluste bis zum
Pressen und die oft längere Liegezeit der Rundpreßballen
auf dem Boden verdirbt bei schlechten Witterungsbedingungen
das Erntegut.

Allen bislang bekannten Verfahren haftet noch gemeinsam
der besondere Nachteil an, daß die abgegebenen Rundpreßballen bei hängigem Gelände hangabwärts rollen, auf
Straßen, Nachbargelände oder dergleichen, so daß eine große
Unfallgefahr für Menschen und Tiere besteht und Zäune und
dergleichen, sowie die Ballen selbst, zerstört werden.
Auch sind die Ballen aus Gräben, Schluchten und von abgelegenen Plätzen schwer zu bergen.

- 3 -

Der Erfindung liegt die Aufgabe zugrunde all diese Nachteile auszuschalten, indem sie ein Verfahren und die hierzu notwendigen Vorrichtungen vorschlägt, durch die bei
geringem Zeit- und Einrichtungsaufwand, sowie Brennstoffersparnis, das Pressen beschleunigt, ein Einsammeln der verstreut liegenden Ballen auf dem Feld vermieden, das Arbeiten in Hanglagen ermöglicht und die Bodenverfestigung auf
ein Minimum beschränkt wird.

Diese Aufgabe wird erfindungs- verfahrungsgemäß dadurch gelöst, daß die aus dem Preßraum austretenden Rundpreßballen
mittels einer an der Rundballenpresse angeschlossenen Transporteinrichtung bis zu einem Zwischen- bzw. Lagerplatz befördert und hier vorzugsweise reihenweise abgelegt werden.

Hierdurch gelangen die fertiggestellten Rundpreßballen
nicht verstreut liegend auf das Feld und können von Nachfolgebeförderungseinrichtungen ohne großen Zeitaufwand
übernommen werden.

Vorzugsweise wird erfindungsgemäß hierzu vorgeschlagen,
daß zum Transport der Rundpreßballen ein einachsiger Tiefladewagen hinten an die Rundballenpresse angehangen wird.

Nach einer bevorzugten Ausführung der Erfindung wird in
Vorschlag gebracht, eine Vielzahl von Rundpreßballen, etwa
2 bis 5 Stück gleichzeitig transportieren zu können.

Vorrichtungs- erfindungsgemäß wird die Aufgabe zur Ausführung des Verfahrens dadurch gelöst, daß an der Hinterseite der Rundballenpresse ein Tiefladeanhänger so angekuppelt wird, daß die austretenden Rundpreßballen auf dem
Deichselbereich des Tiefladeanhängers zur Auflage gelangen, von
wo aus sie mittels einer Fördereinrichtung weiter nach hinten
gebracht werden, so daß sie aus dem Bereich der verschwenkenden rückwärtigen Verschlußklappe der Rundballenpresse
auf die Ladefläche gelangen, wobei der Tiefladeanhänger mit
Einrichtungen zum Halt der Rundpreßballen am Ende der Lade-

- 4 -

fläche sowie zum Abladen derselben eingerichtet ist.

Ein weiterer erfinderischer Vorteil wird dadurch erzielt, daß in
zwei jeweils außen liegenden Anhängerschienen der Rundballenpresse zueinander fluchtende, waagerecht und senkrecht zur
Fahrtrichtung liegenden Scharnierbolzen lagern, mittels denen
der Rahmen des Tiefladeanhängers an der Rundballenpresse angeordnet ist, wobei der Tiefladeanhänger hinten
außen jeweils ein um eine etwa senkrecht liegende Achse
schwenktbar gelagertes Stützrad aufweist.

Gemäß einer zweckmäßigen Ausführungsform wird der auf dem
Deichselbereich des Tiefladeanhängers abgelegte Rundpreßballen durch einen unter ihm befindlichen, über Hubzylinder
schwenkbaren, Kippbügel so weit nach hinten befördert, daß
er sich aus dem Bereich der Bewegungsbahn der Unterkante
der Verschlußklappe befindet und daß dieser Rundpreßballen
oder der vorher geformte und bereits geladene den Halt
gegen Abrollen nach hinten über einen mittels Sperrklinke verriegelten oder durch Federzug gehalterten Schwenkhebel erfährt,
wobei zum Abladen der Schwenkhebel über ein Zugseil entriegelt wird oder der Kippbügel den Rundpreßballen weiter,
gegen die Wirkung einer Feder des Schwenkhebels, in eine
solche hintere Stellung bringt, so daß der Rundpreßballen
auf das Erdreich fällt.

Vorteilhaft ist es, daß der Tiefladeanhänger seitliche
Begrenzungsrohre zum Halt der Rundpreßballen aufweist.

Ein einfache erfinderische Ausgestaltung des Rahmens und
eine Leichtzügigkeit beim Kurvenfahren ergibt sich dadurch,
daß der Rahmen des Tiefladeanhängers freitragend, ohne
Stützräder, ausgebildet und an der Rundballenpresse über
Ständer bzw. Zugstreben starr angeschlossen ist.

Erfindungsgemäß kann die Ladefläche ,auch einschließlich des
Ballenhebers, als bekannter Roll-oder Kratzboden ausgebildet
sein, wobei die Leisten entsprechend hoch auszubilden sind.

Nach einem weiteren Merkmal der Erfindung wird vorgeschlagen den Tiefladewagen mittels einer Anhängekupplung
hinten unten in der Mitte der Rundballenpresse anzuhängen,
wobei die Laufräder des Tiefladewagens vorzugsweise in der
gleichen Spur der Rundballenpresse liegen.

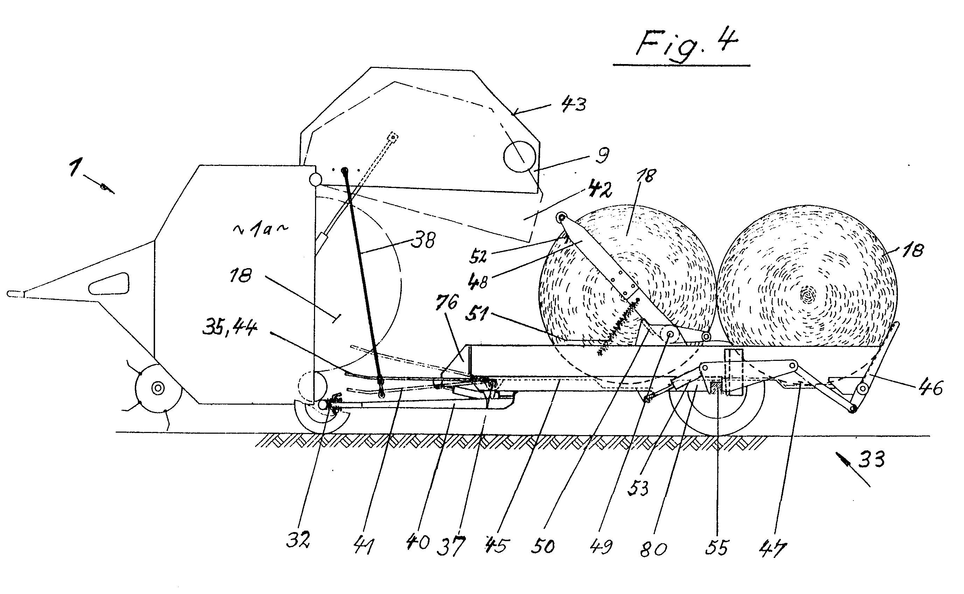

Erfindungsgemäß ist es von Vorteil, daß der ausgetretene
und sich im Deichselbereich des Tiefladeanhängers befindliche Rundpressballen von einem schwenkbar angeordneten
Ballenheber auf ein solch hohes Niveau gebracht wird, daß
er weiter nach hinten auf die Ladefläche rollt, bis zum
Anschlag an eine klappbare Rückwand oder bis zum bereits
vorher geladenen Rundpreßballen, wobei die Rundpreßballen
bei der Aufnahme durch den Ballenheber von einem etwa in
Fahrzeugmitte beiderseits schwenkbar angeordneten Ballenhaltebügel, der sich an der Vorderseite des zu ladenden
Rundpreßballens anlegt, auf ihm abläuft, um dann hinter
seine vordere Partie zu treten, wie in Fig. 4 dargestellt.

Günstig ist es, daß durch die sich öffnende Rückwand der
Rundballenpresse der Ballenheber angehoben wird, indem
dieser mittels geeigneter Zugmittel, wie Zugseilen, an die
aufklappbare Rückwand angeschlossen wird.

Eine einfache Bauart des Fahrzeugrahmens und ein günstiges
Abladen der Rundpreßballen vom Tiefladeanhänger wird dadurch erreicht, daß der Fahrzeugrahmen im wesentlichen
U-förmig, nach hinten offen, ausgebildet ist und aus einem
vorderen Querträger mit Deichsel, den an ihm außen beidseitig angeschlossenen, nach hinten führenden Seitenteilen,
vorn mit Lageraugen der Schwenkachse für den Ballenheber
und die Ladefläche, den an den Seitenteilen angeschlossenen
Achsen und Lagerschilde besteht, wobei die Ladefläche vorn
von der Schwenkachse und etwa in ihrem Mittelbereich beidseitig von Hydrobewegern getragen und angehoben bzw. abgesenkt wird und hierzu die einerseits mittels Schwenkaugen
an ihr und andererseits mittels Schwenkaugen über Lagerschilde am Fahrzeugrahmen anschließen.

- 6 -

Bei einer zweckmäßigen erfinderischen Ausführungsform
wird so vorgegangen, daß der Ballenhaltebügel vorn eine
durchgehende Rolle aufweist, die sich auf den von der
Rundballenpresse übernommenen Rundpreßballen auflegt, auf
ihm abrollt, den Ballenhaltebügel anhebt, wobei sich dieser beim weiteren Abrollen wieder absenkt, so daß die Rolle
bei der Hebung des Rundpreßballens sich an seiner Vorderseite befindet.

Vorteilhaft ist es, daß die klappbare Rückwand hinten an
der Ladefläche schwenkbar angeschlossen ist, andererseitig
zur Schwenkachse einen Hebelarm aufweist, an dessen Gelenk
ein Lenker, der anderendig über den höher liegenden Drehpunkt am ortsfesten Lagerschild anschließt, wobei kinematisch die Abstands- und Lagerverhältnisse dieser zusammen
wirkenden Teile so gewählt sind, daß bei hoch liegender Ladefläche die klappbare Rückwand annähernd senkrecht und
bei abgesenkter Ladefläche etwa waagerecht nach hinten
liegt.

Eine hohe Stabilität wird dadurch erreicht, daß etwa im
Bereich der Achse zwischen den Seitenteilen und der Ladefläche beidseitig je eine Seitenführungseinheit Führungsstück - Kulisse vorgesehen ist, die die Absenkung und Anhebung der Ladefläche nicht beeinträchtigen.

Weitere Einzelheiten zur Lösung der mit der Erfindung gestellten Aufgabe in Bezug auf bauliche bzw. maschinelle
Mittel sind in der Figurenbeschreibung näher erläutert
und in den Patentansprüchen niedergelegt, sowie in den
Figuren der Zeichnung dargestellt.

Die Erfindung wird in der Zeichnung anhand mehrerer Ausführungsbeispiele in der Weise erläutert, daß Merkmale, die
in einer Figur gezeichnet oder beschrieben sind, in sinngemäß gleicher Weise auch auf andere Ausführungsbeispiele
übertragbar sein sollen.

Die mit der Erfindung erzielten Vorteile bestehen insbesondere darin, daß ein Verfahren und die erforderlichen
Vorrichtungen vorgeschlagen wird, mittels denen Rundpreßballen bei ihrer Erzeugung auf dem Feld mittels an die
Rundballenpresse angekuppeltem Tiefladeanhänger bis zum
Feldrand oder einer sonstigen Sammelstelle transportiert
werden, so daß die Ballen dorthin ohne jeden Aufwand an
zusätzlicher Arbeitszeit und ohne mühevolle Bergung der
bislang verstreut auf den Feldern liegenden Ballen gebracht
werden, wodurch große Ersparnisse an Zeit, Maschinenstunden, Treibstoff und dgl. erzielt werden und die Böden
nicht mehr als unvermeidbar verfestigt werden, was für die
Nachfrucht höhere Erträge sichert. Von großer Bedeutung
ist hierbei, daß durch die Erfindung bei hügeligem Gelände
die Erzeugung von Rundpreßballen ohne besondere Unfallgefahren und mühevolle Bergungsarbeiten erst ermöglicht
wird.

Zu=dem wird durch den Zeitgewinn das Wetterrisiko für das
zu erntende Gut erheblich veringert. Bei Schlechtwetterperioden können die Rundpreßballen auf dem Zwischenlagerplatz oder dgl. vor einem Gewitterregen abgedeckt werden,
was beim verstreuten Ablegen auf dem Feld praktisch nicht
möglich ist.

In der Zeichnung sind einige Ausführungsbeispiele
schematisch dargestellt, es zeigen:

Figur 1 eine Seitenansicht auf ein Ausführungsbeispiel,

Figur 2 eine entsprechende Ansicht,

Figur 3 eine Draufsicht auf das Ausführungsbeispiel
        nach Fig. 1,

Figur 4 eine Seitenansicht auf ein weiteres Ausführungsbeispiel,

Figur 5 das Beispiel gemäß Figur 4, wobei die Rundpreßballen abgeladen sind,

Figur 6 eine Draufsicht gemäß Figur 4,

**Figur 7 eine Seitenansicht gemäß Figur 4, bei der jedoch nur
        der Anhängerrahmen und die Ladefläche im vergrößerten
        Maßstab gezeigt ist, letztere zusätzlich strichpunktiert
        in abgelassener Position.**

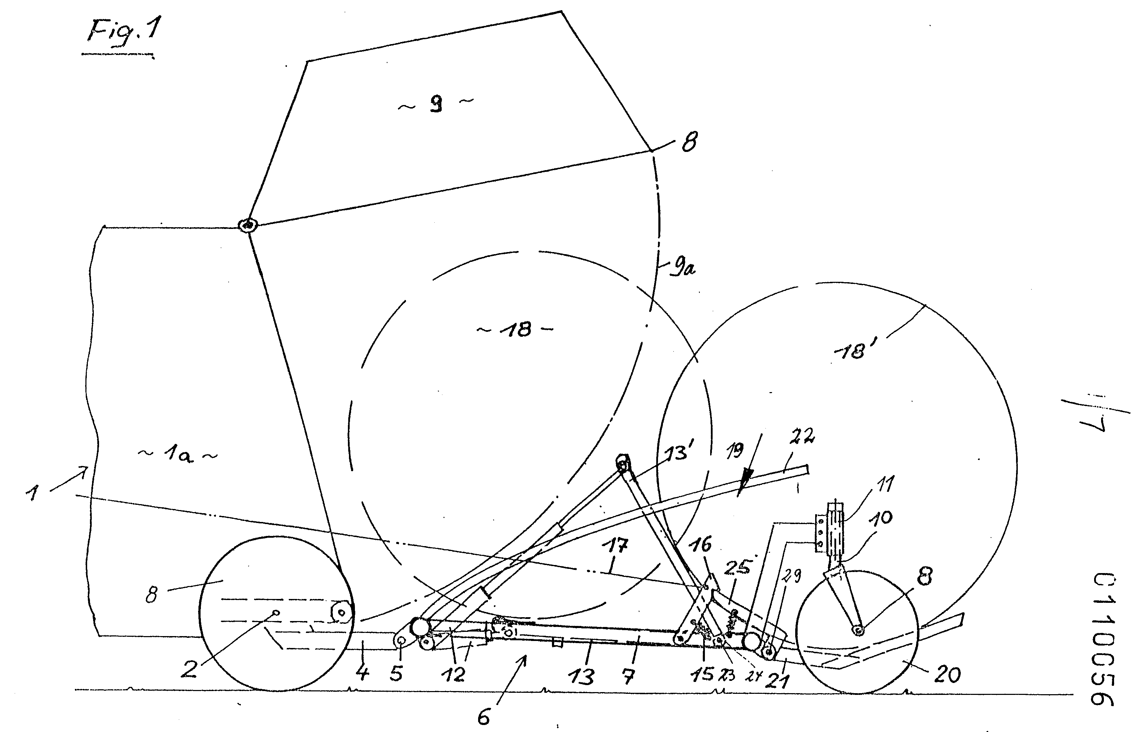

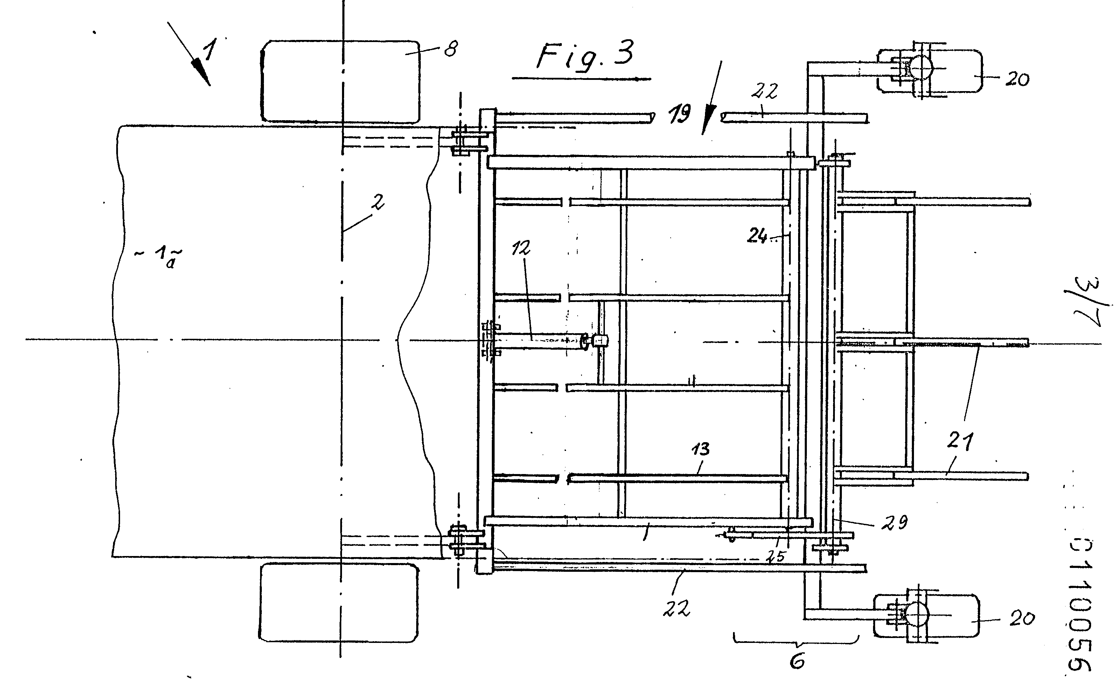

Die Rundballenpreisse 1 nach den Figuren 1 bis 3 weist
den Preßraum 1a auf und über die Achse 2 sind ihre
Räder 8 angeordnet.

An der Achse 2 oder dem Rahmen der Rundballenpresse 1
sind Anhängeschienen 4 befestigt, die jeweils außen
zwei zueinander fluchtende Scharnierbolzenlöcher 5
zum Anschluß des Tiefladeanhängers 19 aufweisen.
Dieser weist hinten schwenkbar nachlaufend aufgehängte Stützräder 2o auf, welche mittels ihres
Schwenkzapfens 1o in den Lagerstücken 11 schwenkend
angeordnet sind.

Am Rahmen 7 ist beidseitig um die Achse 23 ein Kippbügel 13 mittels seines Lagerrohres 24 schwenkbar
angeordnet und durch den Hubzylinder 12 verschwenkbar.

Am hinteren Ende 6 des Rahmens 7 ist die Schwenkgabel 21
angelenkt, die in ihrer Halteposition für die Rundpreßballen durch einen an ihr angeschlossenen Hebel 25
arretiert wird, wobei dieser durch die schwenkbar
gelagerte und mittels der Feder 15 beaufschlagte Sperrklinke 16 um die Achse 29 gehaltert wird.

Der mehrstufige Hubzylinder 12 ist so weit ausfahrbar, daß der an ihm angeschlossene Kippbügel 13
in der dargestellten tiefen Position, in der der Rundpreßballen auf ihm zunächst aufliegt, in der Position 13'
entsprechend der Position 18'des Ballens und in einer
weiter verschwenkten, nicht dargestellten Position,
zum Abladen der Ballen gebracht werden kann.

Beim Beginn des Weiterverschwenkens des Kippbügels 13
aus der Position 13' zieht der Bedienungsmann am Zugseil 17
und gibt hiermit die Schwenkgabel 21 frei, so daß der
Preßrundballen 18 zum Abladen herunterrollt.

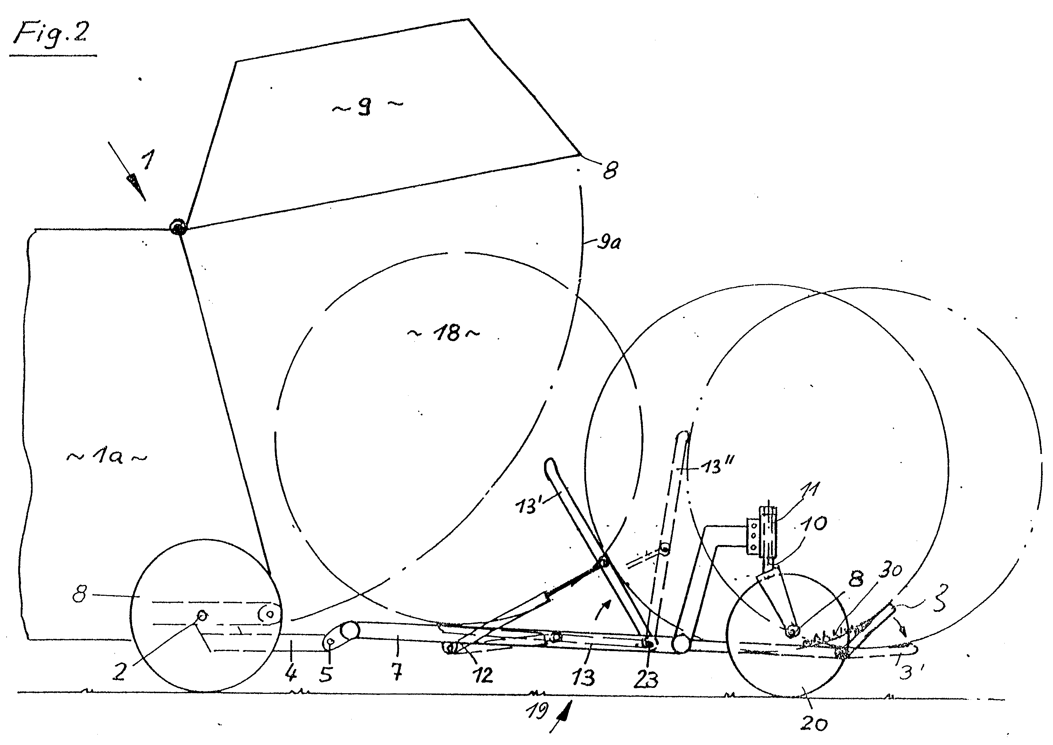

Gemäß Fig. 2 gibt der Schwenkhebel 3 dem Ballen den
Halt gegen Abrollen, wozu er durch eine Feder 3o das
Haltemoment erfährt. Zum Abladen des Rundpreßballens
überwindet der weiter verschwenkende Kippbügel 13
über den Rundpreßballen 18 das Moment der Feder und
der Schwenkhebel 3 gelangt in die Position 3', so daß
der Rundpreßballen auf's Erdreich fällt.

Durch die seitlichen Begrenzungsrohre 22 wird den
geladenen Ballen ein Halt gegen seitliches Abrutschen
verliehen.

Beim Ausführungsbeispiel gemäß Fig. 4 ist der Tiefladewagen 33 mit seiner Deichsel 4o über die Anhängerkupplung 32 an der Rundballenpresse 1 angehangen, wobei
der austretende Rundpreßballen 18 bei geöffneter Verschlußklappe 9 auf den Ballenheber 35 gelangt, der
am Anhängerrahmen 65 um die Schwenkachse 37 schwenkbar
angeordnet ist. Im letzten Bereich des Öffnens der
Verschlußklappe 9 wird der Ballenheber 35, wie es
in Fig. 4 zu sehen ist, angehoben, da das Zugseil 38

C110056

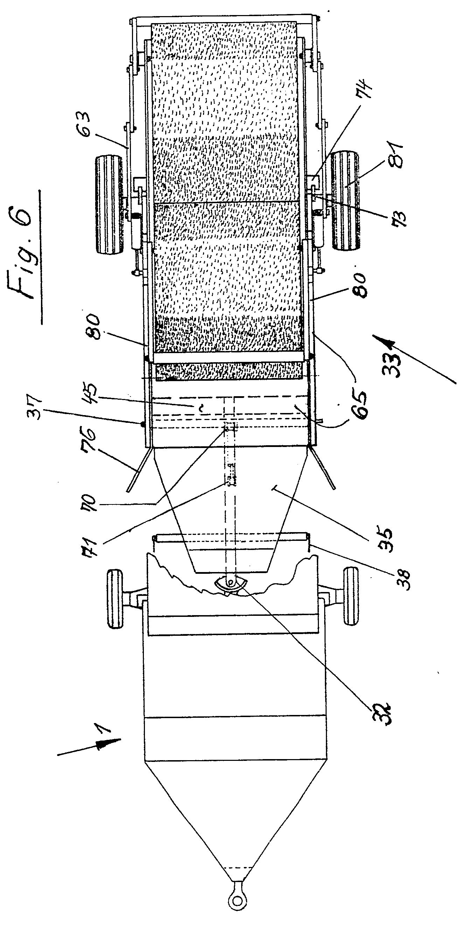

in der Länge so abgestimmt ist, daß sich der Ballenheber 35
in der Position 41 befindet, wenn sich die Verschlußklappe 9 in der Position 42 befindet, in der der Rundpreßballen 18 die Preßkammer 1a verläßt, wobei der
Ballenheber 35 in seinem vorderen Bereich etwa auf
einer Höhe oder etwas niedriger  liegt, als es der
unteren Kontur des Rundpreßballens 18 entspricht. Beim
weiteren Öffnen der Verschlußklappe 9 in die Stellung 43
befindet sich der Ballenheber 35 in der Position 44, in
der dann der weiter ausgetretene Rundpreßballen 18
beginnt, von dem Ballenheber 35 auf die Ladefläche 45
zu rollen. Zur sicheren Übergabe des Rundpreßballens 18
durch Rollen desselben sind an der Ladefläche 45 beidseitig Leitbleche 76 angeordnet, die, wie in Figur 6
zu erkennen ist, mit einer Einlaufschräge versehen
sind. Der Ballenheber 35 wird anschließend noch weiter
mittels der Verschlußklappe 9 angehoben, so daß ein
beschleunigtes Abrollen gewährleistet ist und der
Rundpreßballen 18 durch die erhaltene raschere Drehbewegung bis zum Anschlag an die hochstehende klappbare
Rückwand 46 rollt und hier durch eine Vertiefung 47
der Ladefläche 45 gegen Zurückrollen gesichert wird.

Zur Sicherung gegen das Nachvornrollen kann insbesondere
bei steilen Hanglagen ein Ballenhaltebügel 48 vorgesehen
sein, der um die Schwenkachse 49 schwenkbar gelagert ist
und mittels der Feder 51 gegen den Anschlag 5o anliegt.
Beim Rollen des Rundpreßballens 18 auf die Ladefläche 45
von der Rundballenpresse 1 weicht der Ballenhaltebügel 48
zunächst schwenkend nach oben aus und tritt dann in die
dargestellte Position 52 sobald der Rundpreßballen 18 am
bereits vorher geladenen Rundpreßballen 18 anliegt.

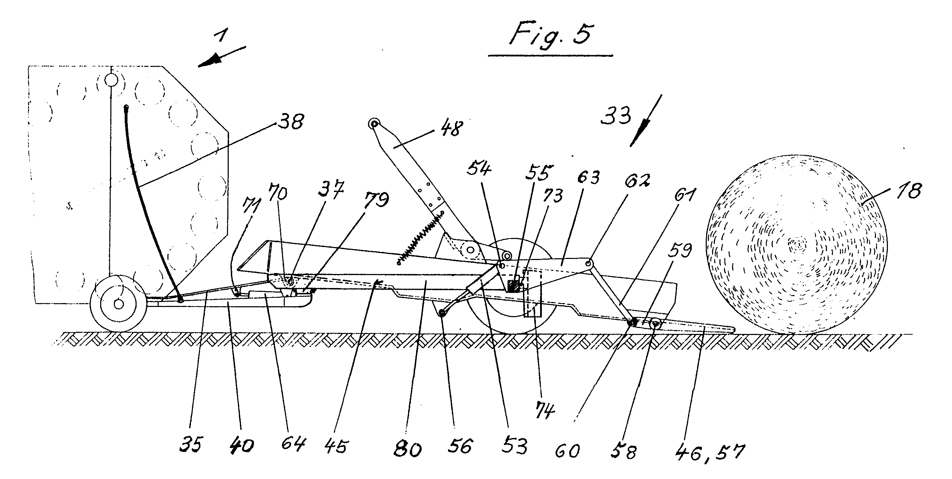

Gemäß der Fig. 5 ist zu erkennen, daß die Ladefläche 45
um die Schwenkachse 37 abgelassen ist, indem der Hydrobeweger
53, der um seine Schwenkachse 54 ortsfest am Lagerschild 63 an der Fahrzeugachse 55 anschließt und anderendig über
sein Schwenkauge 56 an der Ladefläche 45 angreift, diese
freigab. Hierbei schwenkte gleichzeitig selbsttätig
die klappbare Rückwand 46 in die dargestellte tiefe
Position 57, weil sie um die Schwenkachse 58 fest
an der Ladefläche gelagert ist und mit ihrem Hebelarm 59
über ihr Gelenk 6o und dem Lenker 61 verbunden ist,
wobei letzterer am ortsfesten Drehpunkt 62 des Lagerschildes 63 anschließt. Durch Einziehen des Hydrobewegers 53 wird die Ladefläche 45 und die klappbare
Rückwand 46 in umgekehrter Folge wieder in die Lade-
und Halteposition gemäß der Figur 4 zurückgeschwenkt.

Anstelle des Anhebens des Ballenhebers 35 durch die aufklappbare Verschlußklappe der Rundballenpresse 1 über die
Zugseile 38 kann dieselbe auch über einen Hydrobeweger 64
auf- und abgesenkt werden.

Falls die Betätigung des Ballenhebers 35 nicht durch
die aufklappbare Verschlußklappe 9 erfolgt, weil z.B.
letztere dies nicht zuläßt oder der Tiefladeanhänger 19
zur Aufnahme der Rundpreßballen 18 vom Feld eingesetzt
wird, so wird vorgeschlagen, den Ballenheber 35 entweder
mittels des Hydrobewegers 64 oder einer elektrisch angetriebenen, an sich bekannten Einrichtung auf- und
abschwenkend zu bewegen. Hierzu ist unter ihm die
Lagergabel 71 vorgesehen.

Der Anhängerrahmen 65 ist U-förmig ausgebildet und
besteht im wesentlichen aus dem vorderen Querträger 79,
an dem die Seitenteile 8o anschließen, an denen die
Fahrzeugachsen 55 für die Räder 81 als jeweils kurze
Achsstummel befestigt sind, sowie die Lagerschilde 63
und die Deichsel 4o.

- 12 -    0110056

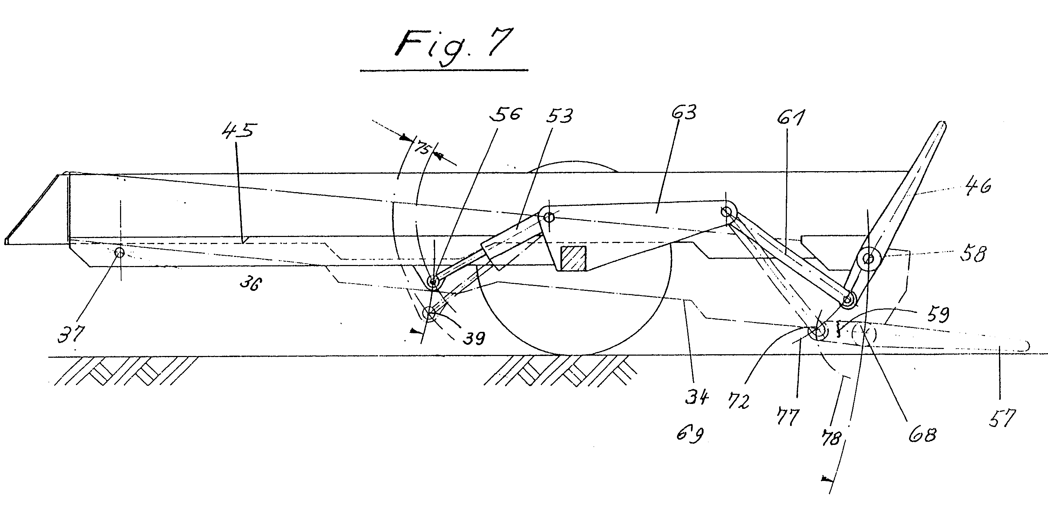

Der besondere Vorzug, daß die Rückwand 46 durch das Ablassen der Ladefläche 45 ebenfalls in die tiefe Position
57 verschwenkt, ist wie es in Figur 7 gut zu erkennen ist,
im einzelnen darin begründet, daß der Lenker 61 um seinen
am Lageschild 63 des Anhängerrahmens 65 ortsfest so hoch
angeordneten Drehpunkt 62 anschließt, daß beim Ablassen der
Ladefläche die Schwenkachse 58 gemäß dem Radius 69 in die
Position 68 gelangt und sich der Kreisbogen 77 des Lenkers
61 mit dem Kreisbogen 78 des Hebelarms 59 der Rückwand im
Punkt 72 schneiden, wodurch die Rückwand in die Position
57 verschwenkt. Kinematisch können in den Lagen der Drehpunkte und Lagen des Lenkers bzw. des Hebelarms    oder
im System Änderungen vorgenommen werden, ohne die Erfindung zu verlassen.

Beim Verlängern des Hydrobewegers 53 um das Maß 75 wandert
das Schwenkauge 56 um den Radius 36 um die Schwenkachse 37
in die Position 39, so daß die Ladefläche zum Abladen der
Rundpreßballen 18 in die strichpunktierte dargestellte
Position 34 gelangt, wie sie auch in der Figur 5 berücksichtigt ist.

Zur Abstützung des U-förmigen Anhängerrahmens 65
gegen seitliches Verbiegen seiner Seitenteile 8o, insbesondere im beladenen Zustand beim Fahren in  der
Schichtlinie an Hängen und dergleichen, werden die
Führungsstücke 73 der Seitenteile 8o von den
Kulissen 74 der Ladefläche 45 umschlossen.

Zur Halterung der Schwenkachse 37 dienen die an den
Seitenteilen angeordneten Lageraugen 7O, und die
Schwenkachsen 49 sowie die Anschläge 5o werden über
die Lagerschilde 63, die an den Seitenteilen 80 der
Ladefläche 45 angeschlossen sind, gehaltert.

Die Erfindung ist auf die aufgeführten Beispiele
nicht beschränkt, so kann das Fahrzeug auch für
eine größere Anzahl Rundpreßballen, z.B. 5 bis 7,
ausgelegt werden, auch zweiachsig bzw. mit Tandemachse ausgeführt sein.

Ernst Weichel

Heiningen

Busatis-Werke GmbH u. Co KG

Remscheid-Lennep

PATENTANSPRÜCHE

1. Verfahren zum Transportieren und Lagern von Rundpreßballen aus halmartigem Gut dadurch gekennzeichnet, daß die aus dem Preßraum (1a) austretenden Rundpreßballen (18) unmittelbar mittels einer an der Rundballenpresse (1) angeschlossenen Transporteinrichtung (19,33) bis zu einem Zwischen- bzw. Lagerplatz befördert und hier vorzugsweise reihenweise abgelegt werden.

2. Verfahren und Anspruch 1 dadurch gekennzeichnet, daß zum Transport der Rundpreßballen (18) ein einachsiger Tiefladewagen (19,33) hinten an die Rundballenpresse (1) angehangen wird, der vorzugsweise eine vielzahl von Rundpreßballen, etwa 2 bis 5 Stück, gleichzeitig transportieren kann.

3. Vorrichtung zur Durchführung des Verfahrens nach den Ansprüchen 1 und 2 dadurch gekennzeichnet, daß an der Hinterseite der Rundballenpresse (1) ein Tiefladeanhänger (19,33) so angekuppelt wird, daß die austretenden Rundpreßballen auf den vorderen Bereich des Tiefladeanhängers (19,33) zur Auflage gelangen, von wo aus sie mittels Fördereinrichtung (12,13,38,41) weiter nach hinten gebracht werden, so daß sie aus dem Bereich der verschwenkenden rückwärtigen Verschlußklappe (9) der Rundballenpresse (1) auf die Ladefläche (45) gelangen, wobei der Tiefladeanhänger (19,33) mit Einrichtung zum Halt (3,21,46) der Rundpreßballen (18) am Ende der Ladefläche (13,45) sowie zum Abladen derselben eingerichtet ist.

0110056

4. Vorrichtung nach Anspruch 3 dadurch gekennzeichnet, daß an jeweils außen liegenden Anhängerschienen (4) der Rundballenpresse (1) über zueinander waagerecht und senkrecht zur Fahrtrichtung liegenden Scharnierbolzen (5) Lageraugen (70) des Rahmens (7) des Tiefladeanhängers (19) anschließen , wobei der Tiefladeanhänger (19) hinten außen jeweils ein um eine etwa senkrecht liegende Achse (10,11) schwenkbar gelagertes Stützrad (20) aufweist.

5. Vorrichtung nach Anspruch 4 dadurch gekennzeichnet, daß der auf dem Deichselbereich des Tiefladeanhängers abgelegte Rundpreßballen (18) durch einen unter ihm befindlichen, über Hubzylinder (12) schwenkbaren Kipp - bügel (13), so weit nach hinten befördert wird, daß er sich aus dem Bereich der Bewegungsbahn (9a) der Unterkante (8 ) der Verschlußklappe (9) befindet und daß dieser Rundpressballen (18) oder der vorher geformte und bereits geladene den Halt gegen Abrollen nach hinten über einen mittels Sperrklinke (16) verriegelten oder über Federzug (30) gehaltenen Schwenkhebel (3,21) erfährt, wobei zum Abladen der Schwenkhebel (21) über ein Zugseil (17) entriegelt wird oder der Kippbügel (13) den Rundpreßballen (18) weiter, gegen die Wirkung einer Feder (30) des Schwenkhebels (31), in eine solche hintere Stellung bringt, so daß der Rundpreßballen (18) auf das Erdreich fällt.

6. Vorrichtung nach Anspruch 4 und 5 dadurch gekennzeichnet , daß der Tiefladeanhänger (19) seitliche Begrenzungsrohre (22) zum Halt der Rundpreßballen (18) aufweist.

7. Vorrichtung zur Durchführung des Verfahrens nach den Ansprüchen 2 und 3, dadurch gekennzeichnet, daß die Rahmen (7,65) des Tiefladeanhängers (19) freitragend, ohne Stützräder, ausgebildet und an der Rundballenpresse über Ständer bzw. Zugstreben in bekannter Weise starr angeschlossen ist.

C110056

8. Vorrichtung nach den Ansprüchen 3 bis 6, dadurch gekennzeichnet, daß der Tiefladewagen (33) mittels einer Anhängekupplung (32) oder dergleichen hinten unten in der Mitte der Rundballenpresse (1) angehangen wird, wobei die Laufräder (21) des Tiefladewagens (33) vorzugsweise in der gleichen Spur wie die Rundballenpresse (1) liegen.

9. Vorrichtung nach den Ansprüchen 3 bis 6 und 8, dadurch gekennzeichnet, daß der ausgetretene und sich im Deichselbereich des Tiefladeanhängers (33) befindliche Rundpreßballen (18) von einem schwenkbar angeordneten Ballenheber (35) auf ein solch hohes Niveau gebracht wird, daß er weiter nach hinten auf die Ladefläche (45) rollt, bis zum Anschlag an eine klappbare Rückwand (46) oder bis zum bereits vorher geladenen Rundpreßballen (18), wobei der Rundpreßballen (18) beim Herunterrollen von dem Ballenheber (35) von einem etwa in Fahrzeugmitte beiderseits schwenkbar angeordneten Ballenhaltebügel (48), der sich an der Vorderseite des zu ladenden Rundpreßballens (18) angelegt, dann durch Auflaufen auf dem sich nach hinten bewegenden Rundpreßballen in Verbindung mit seiner vorderen Rolle (44), sich vor den geladenen Rundpreßballen legt, wie in Figur 4 dargestellt.

10. Vorrichtung nach den Ansprüchen 3 bis 6 und 8 und 9, dadurch gekennzeichnet, daß durch die sich öffnende Rückwand (9) der Ballenheber (35) angehoben wird, indem dieser mittels geeigneter Zugmittel, wie Zugseil (38), an die aufklappbare Rückwand (9) angeschlossen wird.

11. Vorrichtung nach den Ansprüchen 3 bis 6 und 8 bis 10, dadurch gekennzeichnet, daß eine einfache Bauart des Fahrzeugrahmens (65) und eine günstiges Abladen der Rundpreßballen (18) vom Tiefladeanhänger (33) dadurch erreicht wird, daß der Fahrzeugrahmen (65) im wesentlichen U-förmig, nach hinten offen, ausgebildet ist und aus einem vorderen Querträger (79) mit Deichsel (40), den an ihm außen beidseitig angeschlossenen, nach hinten führenden Seitenteilen (80), vorn mit Lageraugen (70) für die Schwenkachse (32) für den Ballenheber (35), und die Ladefläche (45), den an den Seitenteilen (80) angeschlossenen Achsen (55) und Lagerschilde (63) besteht, wobei die Ladefläche (45) vorn an der Schwenkachse (37) und etwa im Mittelbereich beidseitig von Hydrobewegern (53) getragen und angehoben bzw. abgesenkt wird, wozu diese einerseits mittels Schwenkaugen (56) an der Ladefläche (45) und andererseits mittels Schwenkaugen an Lagerschilde (63) des Fahrzeugrahmens (65) so anschließen, daß bei eingefahrenem Hubzylinder sich die Ladefläche in Hochposition, nach Figur 4, und bei ausgefahrenem Hubzylinder in Tiefposition, nach Figur 5, befindet.

12. Vorrichtung nach den Ansprüchen 3 bis 6 und 8 bis 11, dadurch gekennzeichnet, daß die klappbare Rückwand (46) hinten an der Ladefläche (45) schwenkbar angeschlossen ist, die anderseitig zur Schwenkachse (58) einen Hebelarm (72) aufweist, an dessen Gelenk (60) ein Lenker (61) angreift der anderseitig über den höher liegenden Drehpunkt am ortsfesten Lagerschild (63) anschließt, wobei kinematisch die Abstands- und Lagerverhältnisse dieser zusammen wirkenden Teile so gewählt sind, daß bei hoch liegenden Ladefläche die klappbare Rückwand annähernd senkrecht und bei abgesenkter Ladefläche etwa waagerecht nach hinten liegt.

13. Vorrichtung nach den Ansprüchen 3 bis 6 und 8 bis 12, dadurch gekennzeichnet, daß etwa im Bereich der Achse (55), zwischen den Seitenteilen (80) und der Ladefläche (45) beidseitig je eine gleitende Seitenführungseinheit Führungsstück (73) - Kulisse (74) vorgesehen ist.

C110056

14. Vorrichtung nach den Ansprüchen 3 bis 6, dadurch gekennzeichnet, daß die Ladefläche (45) Seitenteile (87) aufweist, die als nach vorn und außen verlaufende Leitbleche (76) ausgebildet sind.

15. Vorrichtung nach den Ansprüchen 3 bis 6, dadurch gekennzeichnet, daß die Ladefläche (45) mit Vertiefungen (47) versehen sein kann zum Halt der Rundpreßballen gegen unerwünschtes Rollen, die zum Be- und Entladen durch schwenkbar angeordnete Klappen in der Breite der Ladefläche gebildet sind und bei Bedarf zum Be- und Entladen durch Anheben derselben, z. B. über Hydrobeweger, mit der Ladefläche auf gleiche Höhe gebracht werden können.

16. Vorrichtung nach den Ansprüchen 3 bis 6, dadurch gekennzeichnet, daß auf der Ladefläche (45) in der Breite derselben Klappen vorgesehen sind, die zum Halt der Rundpreßballen gegen unerwünschtes Rollen hochgestellt und zum Be- und Entladen auf der Ladefläche (45) in eine flach- und einliegende Position gebracht werden können, wobei die Betätigung über Hydrobeweger erfolgen kann.

Fig.1

~ 9 ~

8

9a

~ 18 ~

~ 18' ~

~ 1a ~

1

13'

19

22

11

10

8

17

16

25

29

8

8

2

4

5

12

6

13

7

15 23 24 21

20

1/7

C110056

Fig.2

Fig. 3

Fig. 4

*Fig. 5*

Fig. 6

# Fig. 7

7/7

C110056